## Europäisches Patentamt

(19) **European Patent Office**

**Office européen des brevets**

(11) Veröffentlichungsnummer: **0 176 084**
**B1**

(12) **EUROPÄISCHE PATENTSCHRIFT**

(45) Veröffentlichungstag der Patentschrifft: **21.03.90**

(21) Anmeldenummer: **85112122.8**

(22) Anmeldetag: **25.09.85**

(51) Int. Cl. ⁵: **A 01 M 7/00, A 01 C 15/04**

(54) **Maschine zum seitlichen Ausbringen von insbesondere körnigem Material.**

(30) Priorität: **25.09.84 DE 3435086**

(43) Veröffentlichungstag der Anmeldung:
**02.04.86 Patentblatt 86/14**

(45) Bekanntmachung des Hinweises auf die Patenterteilung:
**21.03.90 Patentblatt 90/12**

㊴ Bennante Vertragsstaaten:
**DE FR GB**

(56) Entgegenhaltungen:
**DE-A-2 216 014**
**DE-A-3 230 489**
**DE-A-3 242 932**
**FR-A-2 382 171**
**US-A-3 055 594**
**US-A-4 074 766**
**US-A-4 427 154**
**US-A-4 530 405**

(73) Patentinhaber: **Amazonen-Werke H. Dreyer GmbH & Co. KG**
**Postfach 51**
**D-4507 Hasbergen-Gaste (DE)**

(72) Erfinder: **Scheufler, Bernd, Dr.**
**Am Amazonenwerk 101**
**D-4507 Hasbergen (DE)**
Erfinder: **Hülsmann, Werner**
**Voxtruper Strasse 118**
**D-4500 Osnabrück (DE)**

(74) Vertreter: **Patentanwälte Grünecker, Kinkeldey, Stockmair & Partner**
**Maximilianstrasse 58**
**D-8000 München 22 (DE)**

LIBERGRAF, STOCKHOLM 1990

## Beschreibung

Die Erfindung betrifft eine Maschine zum Ausbringen von insbesondere körnigem Material mit einem Vorratsbehälter und einem Verteilergestänge, welches in der Betriebsstellung den Vorratsbehälter quer zur Fahrtrichtung beidseitig mit je einem Seitenausleger seitlich überragt, wobei jeder Seitenausleger in zumindest zwei zueinander bewegbare Gestängeteile unterteilt ist, dessen dem Vorratsbehälter zugewandtes inneres oder erstes Gestängeteil mittels eines inneren oder ersten Gelenkes mit annähernd in Fahrtrichtung verlaufender Achse am Rahmen der Maschine und mittels eines äußeren oder zweiten Gelenkes am äußeren oder zweiten Gestängeteil angelenkt ist, wobei ferner die Gestängeteile jedes Seitenauslegers über Steuerelemente derart miteinander verbunden sind, daß beim Verschwenken des ersten Gestängeteils mittels eines an diesem und am Maschinenrahmen angelenkten Antriebselementes um die Achse des ersten Gelenks das zweite Gestängeteil eine korrespondierende, zwangsläufige Faltbewegung um das zweite Gelenk vollführt, und wobei weiterhin das äußere Gestängeteil durch ein längenveränderbares Spannelement mit dem Maschinenrahmen verbunden ist.

Eine derartige Maschine mit zwangsweise durch die Steuerelemente gesteuerter Bewegung dreier Gestängeteile jedes Seitenauslegers ist bereits aus der DE-OS-3 230 750 bekannt. Die Antriebselemente dienen dazu, die inneren Gestängeteile anzuheben bzw. abzusenken, wodurch die äußeren Gestängeteile infolge der Steuerelemente zwangsweise auf die Bewegungen der inneren Gestängeteile abgestimmt und somit bis zum Erreichen der Nichtbetriebsstellung zusammengefaltet bzw. der Betriebsstellung auseinandergefaltet werden. In der letzteren Stellung sind die Gestängeteile beider Seitenausleger in der Horizontalen auseinandergestreckt und mittels der Spannelemente in diesem gestreckten Zustand gehalten. Um das unerwünschte Absenken der Seitenausleger infolge Dehnung der Spannelemente aufgrund der ständigen Zugbeanspruchung zu verhindern, sind Spannschlösser zum Nachstellen vorgesehen. Eine Beschädigung des Gestänges durch Auftreffen der Seitenausleger auf den Boden bei Materialausbringung auf ebenem Gelände ist normalerweise ausgeschlossen. Jedoch können bei Fahrtem auf unebenem oder hügeligem Gelände die Seitenausleger des Gestänges den Boden berühren und dadurch beschädigt werden. Die Seitenausleger können bei dieser bekannten Maschine durch Anheben um einen bestimmten Winkel nicht an die Geländekontur angepaßt werden, da bei einem derartigen Anheben, das mittels der an die inneren Gestängeteile angreifenden Antriebselemente erfolgt, die äußeren Gestängeteile zwangsweise eingefaltet werden, wodurch die ordnungsgemäße Materialausbringung nicht mehr gewährleistet ist. Derartige Vorrichtungen sind auch aus FR-A-2 382 171 und US-A-3 055 594 bekannt.

Der Erfindung liegt die Aufgabe zugrunde, eine Maschine der eingangs genannten Art mit einer von der Bewegung der inneren Gestängeteile abhängigen Zwangssteuerung der Bewegung der äußeren Gestängeteile der Seitenausleger so weiterzubilden, daß das Gestänge an die Geländekonturen zumindest teilweise angepaßt werden kann.

Dies wird dadurch erreicht, daß zusätzlich zu den Antriebselementen zum Falten der Seitenausleger je eine Hebevorrichtung zum Anwinkeln der Seitenausleger in gestrecktem Zustand zwischen dem Rahmen der Maschine und den zweiten Gestängeteilen angeordnet ist, und daß zumindest eine der Anlenkungen jedes Antriebselementes relativ zum jeweiligen ersten Gestängeteil und/oder zum Maschinenrahmen bewegbar oder bei fester Anlenkung jedes Antriebselement gleichzeitig mit der zugeordneten Hebevorrichtung betätigbar ist, um die beim Anwinkeln der Seitenausleger auftretende Schwenkbewegung desselben zu ermöglichen.

Infolge dieser Maßnahmen ist es möglich, die in der Betriebsstellung befindlichen Seitenausleger eines faltbaren Verteilergestänges mit Zwangssteuerung jeweils getrennt um einen bestimmten Winkel anzuheben, so daß sie zumindest teilweise an die Kontur eines unebenen Geländes angepaßt und somit vor Beschädigungen infolge des Auftreffens auf den Boden geschützt sind. Durch diese Anpassung an die Geländekontur wird weiterhin dafür gesorgt, daß die Symmetrie der Streufächer beibehalten wird und dadurch ein gleichmäßiges Ausbringen des Düngers sichergestellt ist. Ferner wird bei dem leichten Anwinkeln des Verteilergestänges die Streuarbeit nicht beeinträchtigt, da die Luftführung in den Rohrleitungen nicht unterbrochen wird.

Dabei ermöglicht die relativ bewegbare Anlenkung des Antriebselementes am Seitenausleger oder am Maschinenrahmen oder an beiden, daß das erste Gestängeteil und damit der gesamte Seitenausleger ohne eine Faltbewegung der äußeren Gestängeteile auch die durch die Betätigung der Hebevorrichtung bewirkte Schwenkbewegung beim Anwinkeln oder Absenken vollführen kann. Die Anlenkung ist vorteilhafterweise in einer als Langloch ausgebildeten Führung bewegbar. Der durch die relativ bewegbare Anlenkung erzielte Effekt kann auch erreicht werden, wenn das Antriebselement gleichzeitig mit der zugeordneten Hebevorrichtung betätigt wird. Dies läßt sich beispielsweise einfach dadurch verwirklichen, daß bei Ausbildung des Antriebselementes und der Hebevorrichtung jeweils als Hubzylinder beide Zylinder an einen gemeinsamen Kreislauf für das Betätigungsmedium angeschlossen sind, vorzugsweise in Parallelschaltung. Natürlich ist es auch möglich, dem Kolben des Antriebselementes bei getrenntem Kreislauf des Betätigungsmediums ein solches Längsspiel im Hubzylinder zu gewähren, daß das erste Gestängeteil bei seinem Anwinkeln aufgrund der Betätigung der Hebevorrichtung diesen Kolben aus dem Zylinder herauszieht, d.h. der Kolben sozusagen durch den Seitenausleger betätigt wird.

Um beim Betätigen der Hebevorrichtungen deren Bewegung in einfacher Weise auf das jeweilige zweite Gestängeteil zu übertragen, greifen die Hebevorrichtungen vorzugsweise an dem jeweiligen Spannelement an. Dadurch ergibt sich auch gleichzeitig der Vorteil, herkömmliche, bereits im Einsatz befindliche Maschinen in einfacher Weise mit der Hebevorrichtung nachzurüsten, insbesondere wenn diese als Hubzylinder, beispielsweise Hydraulikzylinder, ausgebildet ist. Hierbei kann das Anwinkeln der Seitenausleger durch den Hub des jeweiligen Hubzylinders der Antriebselemente begrenzt werden. Die gleiche Funktion kann aber auch vom Hubzylinder der Hebevorrichtung oder von der als Langloch ausgebildeten Führung für die Anlenkung des Antriebselementes am Seitenausleger übernommen werden.

Gemäß einer Weiterbildung der Erfindung sind die Hebevorrichtungen und die jeweils zugeordneten Antriebselemente in je einem Hubzylinder zusammengefaßt. In diesem Fall kann jeder Hubzylinder mit zwei Kolbenstangen versehen sein, deren eine mit dem jeweiligen ersten Gestängeteil und deren andere mit dem jeweiligen Spannelement verbunden ist. Vorteilhaft ist es hierbei, die Spannelemente über Rollen umzulenken.

Nachstehend ist die Erfindung anhand zweier Ausführungsbeispiele unter Bezugnahme auf die Zeichnung näher beschrieben. Es zeigen

Fig. 1 die linke Hälfte eines Düngerstreuers gemäß einem ersten Ausführungsbeispiel der Erfindung in der Rückansicht mit bis zur Horizontalen abgesenkten Seitenauslegern in der Betriebsstellung,

Fig. 2 den in Fig. 1 dargestellten Düngerstreuer in der Rückansicht mit angewinkeltem Seitenausleger in der Betriebsstellung,

Fig. 3 den in Fig. und 2 dargestellten Düngerstreuer in der Rückansicht mit teilweise eingefaltetem Seitenausleger,

Fig. 4 die linke Hälfte eines Düngerstreuers gemäß einem zweiten Ausführungsbeispiel der Erfindung in der Rückansicht mit bis zur Horizontalen abgesenktem Seitenausleger in der Betriebsstellung,

Fig. 5 den in Fig. 4 dargestellten Düngerstreuer in der Rückansicht mit angewinkeltem Seitenausleger in der Betriebsstellung,

Fig. 6 den in den Fig. 4 und 5 dargestellten Düngerstreuer in der Rückansicht mit teilweise eingefaltetem Seitenausleger, und

Fig. 7 den Düngerstreuer gemäß dem zweiten Ausführungsbeispiel der Erfindung in Gesamtdarstellung bei der Ansicht von hinten mit vollständig bis zur Nichtbetriebs- oder Transportstellung zusammengefalteten Seitenauslegern.

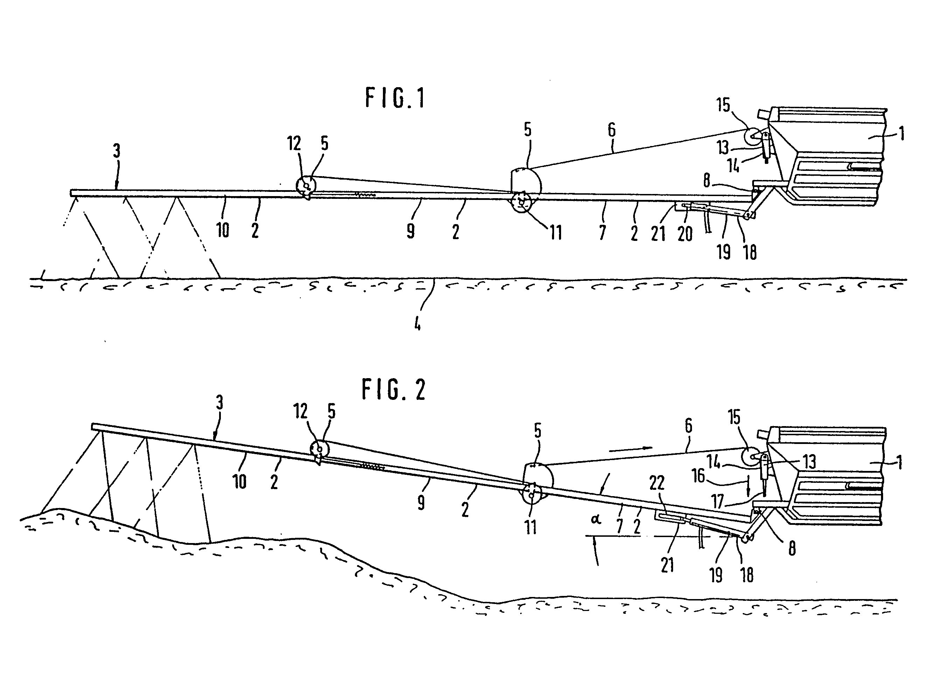

Der in den Figuren 1 bis 3 dargestellte Düngerstreuer gemäß einem ersten Ausführungsbeispiel der Erfindung weist einen Maschinenrahmen und einen Vorratsbehälter 1 auf und ist als Anbaumaschine zum Anbau an die Dreipunktkupplung eines Schleppers ausgebildet. Unterhalb des Vorratsbehälters 1 sind an ihn angeschlossene Rohrleitungen 2 angeordnet, die unterschiedliche Längen aufweisen und sich unterschiedlich weit seitlich nach außen erstrecken. Aus Gründen der Stabilität sind die Rohrleitungen 2 in einem Verteilergestänge untergebracht, welches den Vorratsbehälter 1 mit je einem Seitenausleger 3 beidseitig um ein Vielfaches der Breite des Vorratsbehälters 1 seitlich überragt.

Die Rohrleitungen 2 sind an ein von der Schlepperzapfwelle über eine Gelenkwelle angetriebenes und nicht dargestelltes Gebläse angeschlossen. Im Vorratsbehälter 1 befindliches körniges Material wird in einstellbaren Mengen über nicht dargestellte Öffnungen in die Rohrleitungen 2 gefördert. Hier wird das Material von der durch die Rohrleitungen strömenden Luft erfaßt und bis zu den jeweiligen Ausströmenden der Rohrleitungen geblasen, von wo es in Breitverteilung auf der Bodenoberfläche 4 verteilt wird.

Jeder Seitenausleger 3 besteht aus drei zueinander bewegbaren Gestängeteilen 7, 9, 10, die über Steuerelemente 5 miteinander verbunden und in der in den Fig. 1 und 2 gezeigten Betriebsstellung von einem als Halteseil ausgebildeten Spannelement 6 gehalten sind. Das jeweils am dichtesten zum Vorratsbehälter 1 angeordnete innere oder erste Gestängeteil 7 jedes Seitenauslegers 3 ist über eine in Fahrtrichtung verlaufende horizontale Achse 8 schwenkbar am Maschinenrahmen befestigt. An das innere Gestängeteil 7 jedes Seitenauslegers schließen sich die äußeren Gestängeteile, nämlich das zweite und dritte Gestängeteil 9 und 10 an, die über ebenfalls in Fahrtrichtung verlaufenden horizontale Achsen 11 und 12 mit dem ersten Gestängeteil 7 bzw. miteinander schwenkbar verbunden sind. Das äußerste oder dritte Gestängeteil 10 kann beim Auftreffen auf ein Hindernis entgegen der Fahrtrichtung gegen ein als Feder ausgebildetes, nicht dargestelltes Element schwenkbar ausweichen. Dadurch werden Beschädigungen am Verteilergestänge vermieden.

Unterhalb des inneren oder ersten Gestängeteils 7 jedes Seitenauslegers 3 ist ein Antriebselement 18 in Form eines einerseits am Maschinenrahmen und andererseits mit der Anlenkung 21 am ersten Gestängeteil 7 angelenkten Hydraulikzylinders 19 angeordnet. Die Anlenkung 21 des Hydraulikzylinders 19 ist relativ zum ersten Gestängeteil 7 bewegbar ausgebildet. Dazu ist das freie Ende des Kolbens 20 des Hydraulikzylinders 19 in einer am ersten Gestängeteil 7 befestigten, als Langloch 22 ausgebildeten Führung geführt.

Oberhalb des ersten Gestängeteils 7 jedes Seitenauslegers 3 ist eine Hebevorrichtung 14 in Form eines im wesentlichen vertikal ausgerichteten Hydraulikzylinders 13 am Maschinenrahmen angeordnet. Das Spannelement 6 ist mit einem Ende an dem die Gestängeteile 7 und 9 verbindenden Steuerelement 5 befestigt und mit seinem anderen Ende nach Umlenkung um eine am oberen Ende des Hydraulikzylinders 13 angeordnete Umlenkrolle 15 mit dem oberen Ende einer in Pfeilrichtung 16 ausfahrbaren Kolbenstange 17 des Hydraulikzylinders 13 verbunden.

In der in Fig. 1 dargestellten Betriebsstellung befindet sich jeder Seitenausleger 3 des Verteilergestänges in einem in der Horizontalen völlig gestrecktem Zustand. Dementsprechend befinden sich auch die Kolben 17 und 20 der Hydraulikzylinder 13 bzw. 19 im eingefahrenen Zustand. Sobald nun Dünger in unebenem Gelände ausgebracht werden soll, kann jeder Seitenausleger 3 um einen bestimmten Winkel α aus der Horizontalen angehoben und so zumindest teilweise an die Geländekontur angepaßt werden. Diese Anpassung erfolgt dadurch, daß der an die Schlepperhydraulik angeschlossene Hydraulikzylinder 13 mit Drucköl beaufschlagt wird. Dementsprechend fährt der Kolben 17 aus dem Zylinder 13 unten aus und hebt über das Spannelement 6 den im völlig gestreckten Zustand verbleibenden Seitenausleger 3 um den Winkel α an. Die dabei auftretende Schwenkbewegung des Seitenauslegers 3 erfolgt, obwohl der Hydraulikzylinder 19 des Antriebselementes 18 nicht beaufschlagt wird, ungehindert, da die Anlenkung 21 des Hydraulikzylinders 19 im Langloch 22 in einer Relativbewegung zum Seitenausleger 3 entlanggleiten kann.

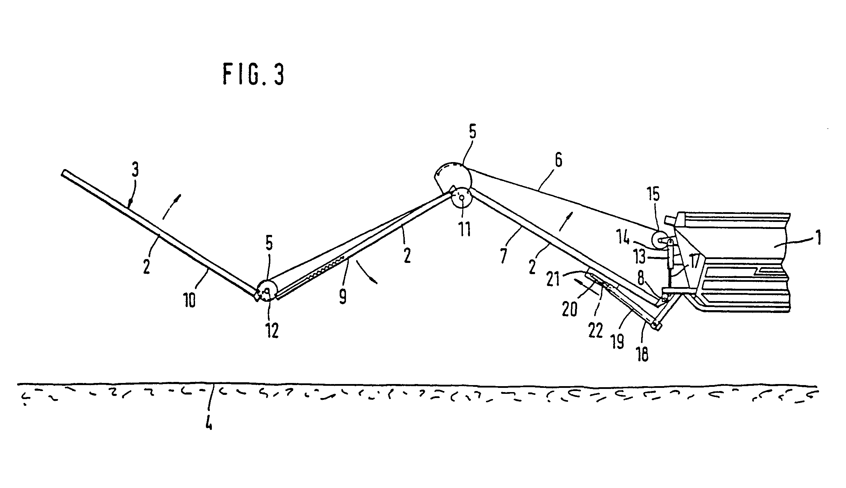

Wird der Hydraulikzylinder 13 der Hebevorrichtung 14 erneut beaufschlagt, so daß der Kolben 17 wieder in den Zylinder 13 bis zur Ausgangsstellung einfährt, so nimmt der Seitenausleger 3 wieder die horizontale Stellung ein. Durch Beaufschlagung des Hydraulikzylinders 19 des Antriebselementes 18 kann der zugeordnete Seitenausleger 3, zwangsläufig gesteuert, zickzackförmig zusammengefaltet werden, wie es in Fig. 3 dargestellt ist.

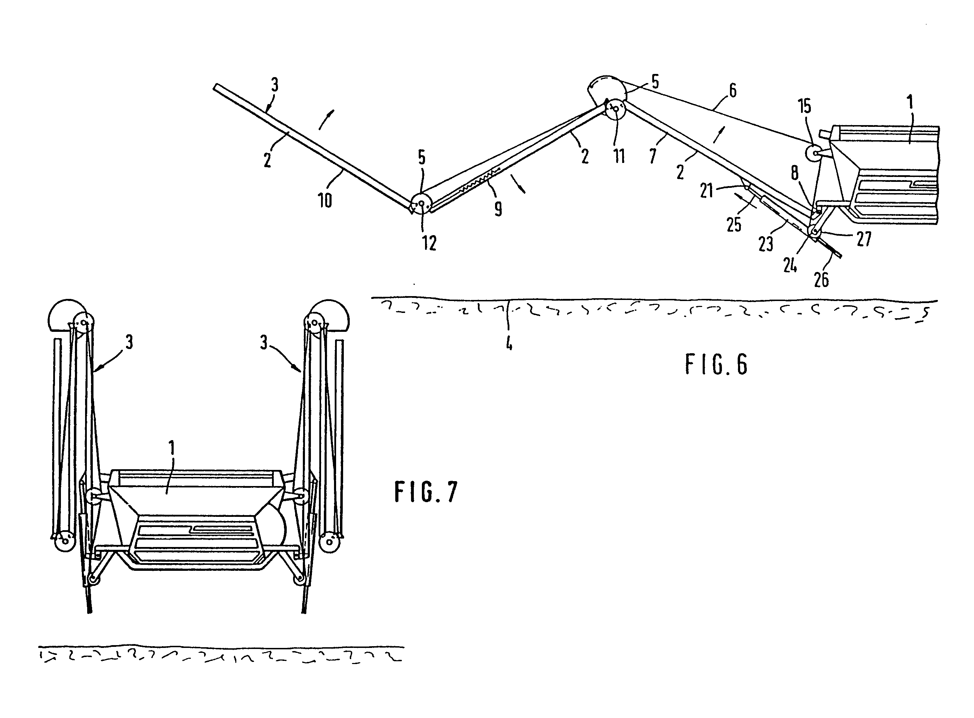

Falls der Hydraulikzylinder 19 nicht mittels der in einem Langloch verschiebbaren Anlenkung am Seitenausleger befestigt ist, müssen beide Hydraulikzylinder 13 und 19 in Parallelschaltung an einen gemeinsamen Hydraulikkreis angeschlossen sein. Bei Beaufschlagung dieser beiden Hydraulikzylinder fährt der Kolben 17 des Zylinders 13 aus und hebt in vorbeschriebener Weise den Seitenausleger 3 um den Winkel α an. Gleichzeitig fährt auch der Kolben 20 des Hydraulikzylinders 19 um eine kleine Strecke aus und ermöglicht so das Anheben des Seitenauslegers 3 um diesen Winkel α, wobei der Kolben 20 lediglich aufgrund des Anhebens des Seitenauslegers 3 durch den Kolben 17 ausfährt. Werden beide Zylinder 13 und 19 weiter mit Drucköl beaufschlagt, fährt der Kolben 17 des ersteren Zylinders bis zum Endanschlag aus, und der Kolben 20 des letzteren Zylinders faltet den Seitenausleger 3 gemäß Fig. 3 in vertikaler Ebene zusammen. Hierbei wird das Spannelement zum Steuerseil und sorgt für ein zwangsläufiges Einfalten des Seitenauslegers in die in der in Fig. 7 dargestellten Transport- oder Nichtbetriebsstellung. Diese beiden Arbeitsabläufe werden ermöglicht durch die Verwendung unterschiedlichen Druckniveaus für die Zylinder 13 und 19. Für das Anheben mit Hilfe des Spannelementes 6 durch den Zylinder 13 ist ein niedrigerer Druck erforderlich als für das Zusammenfalten durch den Zylinder 19.

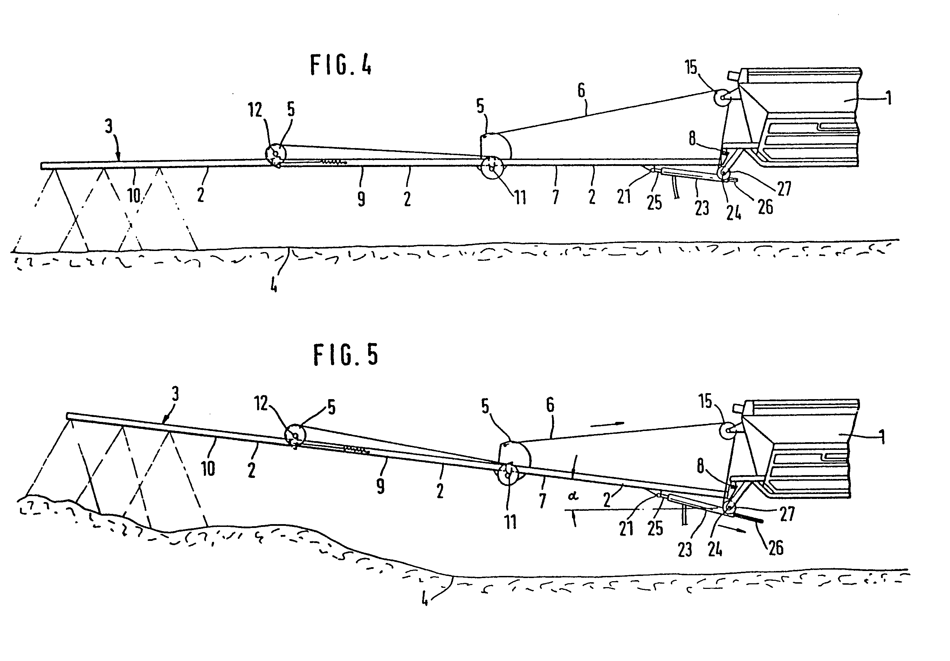

Bei einem zweiten Ausführungsbeispiel der Maschine gemäß Fig. 4 bis 7 sind die Hydraulikzylinder 13 und 19 der Seitenausleger 3 durch je einen einzigen Hydraulikzylinder 23 ersetzt, der unterhalb des Seitenauslegers 3 quer zur Fahrtrichtung an der Aufhängung 24 des Maschinenrahmens angelenkt ist. Der Zylinder 23 weist zwei Kolbenstangen 25 und 26 auf. Erstere ist mit ihrem freien Ende am inneren oder ersten Gestängeteil 7 in einer relativ zu diesem Gestängeteil fixierten Position angelenkt. Die letztere Kolbenstange 26 ist mit dem Spannelement 6 verbunden, welches über die Umlenkrolle 15 und eine zusätzliche Umlenkrolle 27 umgelenkt ist.

In der in Fig. 4 gezeigten Betriebsstellung mit in der Horizontalen ausgeklapptem Verteilergestänge wird jeder Seitenausleger von dem als Halteseil ausgebildeten Spannelement 6 gehalten, wobei die Kolben 25 und 26 des Hydraulikzylinders 23 eingefahren sind. Wird der Zylinder 23 mit Drucköl beaufschlagt, so fährt zuerst der Kolben 26 aus und hebt über das Spannelement 6 den Seitenausleger 3 um den Winkel α bis zu der in Fig. 5 gezeigten Stellung an. Dabei fährt der Kolben 25 ebenfalls um eine geringe Strecke aus. Bei weiterer Beaufschlagung des Hydraulikzylinders 23 fährt der Kolben 26 bis zum Endanschlag weiter aus und der Kolben 25 faltet den Seitenausleger 3 in vorbeschriebener Weise zusammen.

Diese beiden Arbeitsabläufe werden durch Verwendung eines unterschiedlichen Druckniveaus für die Kolben 25 und 26 ermöglicht. Für das Anheben mit Hilfe des Spannelementes 6 durch den Kolben 26 ist ein niedrigerer Druck erforderlich als für das Zusammenfalten durch den Kolben 25.

## Patentansprüche

1. Maschine zum Ausbringen von insbesondere körnigem Material mit einem Vorratsbehälter und einem Verteilergestänge, welches in der Betriebsstellung den Vorratsbehälter quer zur Fahrtrichtung beidseitig mit je einem Seitenausleger seitlich überragt, wobei jeder Seitenausleger in zumindest zwei zueinander bewegbare Gestängeteile unterteilt ist, dessen dem Vorratsbehälter zugewandtes inneres oder erstes Gestängeteil mittels eines inneren oder ersten Gelenkes mit annähernd in Fahrtrichtung verlaufender Achse am Rahmen der Maschine und mittels eines äußeren oder zweiten Gelenkes am äußeren oder zweiten Gestängeteil angelenkt ist, wobei ferner die Gestängeteile jedes Seitenauslegers über Steuerelemente derart miteinander verbunden sind, daß beim Verschwenken des ersten Gestängeteils mittels eines an diesem und am Maschinenrahmen angelenkten Antriebselementes um die Achse des ersten Gelenks das zweite Gestängeteil eine korrespondierende, zwangsläufige Faltbewegung um das zweite Gelenk vollführt, und wobei weiterhin das äußere Gestängeteil durch ein längenveränderbares Spannelement mit dem Maschinenrahmen verbunden ist, *dadurch gekennzeichnet*, daß zusätzlich zu den Antriebselementen (19, 23, 25) zum Falten der Seitenausleger (3) je eine Hebevorrichtung (14, 23, 26) zum Anwinkeln der Seitenausleger (3) im gestreckten Zustand zwischen dem Rahmen der Maschine und den zweiten Gestängeteilen (9) angeordnet ist, und daß zumindest eine der Anlenkungen (21) jedes Antriebselementes (19) relativ zum jeweiligen ersten Gestängeteil (7) und/oder zum Maschinenrahmen bewegbar oder bei fester Anlenkung jedes Antriebselement (23, 25) gleichzeitig mit der zugeordneten Hebevorrichtung (23, 26) betätigbar ist, um die beim Anwinkeln der Seitenausleger (3) auftretende Schwenkbewegung derselben zu ermöglichen.

2. Maschine nach Anspruch 1, *dadurch gekennzeichnet*, daß die Hebevorrichtungen (14, 23, 26) an dem jeweiligen Spannelement (6) angreifen.

3. Maschine nach Anspruch 1 oder 2, *dadurch gekennzeichnet*, daß jede Hebevorrichtung (14, 23) als Hubzylinder (13, 23, 26) ausgebildet ist.

4. Maschine nach Anspruch 3, *dadurch gekennzeichnet* daß der Hubzylinder (13, 23, 26) ein Hydraulikzylinder (13, 23, 26) ist.

5. Maschine nach wenigstens einem der Ansprüche 1 bis 4, *dadurch gekennzeichnet*, daß jedes Antriebselement (19, 23, 25) ein Hubzylinder ist.

6. Maschine nach Anspruch 5, *dadurch gekennzeichnet* daß der Hubzylinder (19, 23, 25) jedes Antriebselementes (18, 23, 25) als Hydraulikzylinder (19, 23, 25) ausgebildet ist.

7. Maschine nach Anspruch 3 oder 4 und 5 oder 6, *dadurch gekennzeichnet*, daß der Hubzylinder (13, 23, 26) der Hebevorrichtung (14, 23, 26) und der Hubzylinder (19, 23, 25) jedes Antriebselementes (18, 23, 25) an einen gemeinsamen Kreislauf des Betätigungsmediums angeschlossen sind.

8. Maschine nach wenigstens einem der Ansprüche 1 bis 7, *dadurch gekennzeichnet*, daß die Hebevorrichtungen und die jeweils zugeordneten Antriebselemente in je einem Hubzylinder (23) zusammengefaßt sind.

9. Maschine nach Anspruch 8, *dadurch gekennzeichnet*, daß jeder Hubzylinder (23) zwei Kolbenstangen (25, 26) aufweist, deren eine Kolbenstange (25) mit dem jeweiligen ersten Gestängeteil (7) und deren andere Kolbenstange (26) mit dem jeweiligen Spannelement (6) verbunden ist.

10. Maschine nach wenigstens einem der Ansprüche 1 bis 7, *dadurch gekennzeichnet*, daß die Anlenkung (21) des Antriebselementes (18) in einer als Langloch (22) ausgebildeten Führung bewegbar ist.

11. Maschine nach Anspruch 10, *dadurch gekennzeichnet*, daß die als Langloch (22) ausgebildete Führung am Seitenausleger (3, 7) angeordnet ist.

12. Maschine nach wenigstens einem der Ansprüche 1 - 11, *dadurch gekennzeichnet*, daß das Antriebselement (19, 23, 25) unterhalb des Seitenauslegers (3) angeordnet ist.

## Claims

1. Machine for distributing material, more especially granular material, including a hopper and a distributor boom which, in the operative position, protrudes laterally beyond the hopper in a transverse direction relative to the direction of travel with a lateral extension at each end, wherein each lateral extension is divided into at least two boom portions which are displaceable relative to each other, the inner or first boom portion which faces the hopper being pivotally connected to the frame of the machine by means of an inner or first pivot joint which has an axis extending substantially in the direction of travel, and being pivotally connected to the outer or second boom portion by means of an outer or second pivot joint, wherein also the boom portions of each lateral extension are interconnected by control means in such a manner that, when the first boom portion pivots about the axis of the first pivot joint by means of a drive means, which is pivotally connected to the first boom portion and to the frame of the machine, the second boom portion executes a corresponding, automatic articulatory movement about the second pivot joint, and wherein additionally the outer boom portion is connected to the frame of the machine by means of a longitudinally variable tensioning means, characterised in that, in addition to the drive means (19, 23, 25) for articulating the lateral extensions (3), a lifting device (14, 23, 26) for angling each of the lateral extensions (3) in their extended positions is disposed portions (9), and in that at least one of the pivotal mountings (21) of each drive means (19) is displaceable relative to the respective first boom portion (7) and/or relative to the frame of the machine or, if the pivotal mounting is fixed, each drive means (23, 25) is actuatable simultaneously with the associated lifting device (23, 26) in order to permit the pivotal movement of the lateral extensions (3) during the process of angling same,

2. Machine according to claim 1, characterised in

9

that the lifting devices (14, 23, 26) co-operate with their respective clamping means (6).

3. Machine according to claim 1 or 2, characterised in that each lifting device (14, 23) is in the form of a lifting cylinder (13, 23, 26).

4. Machine according to claim 3, characterised in that the lifting cylinder (13, 23, 26) is a hydraulic cylinder (13, 23, 26).

5. Machine according to at least one of claims 1 to 4, characterised in that each drive means (19, 23, 25) is a lifting cylinder.

6. Machine according to claim 5, characterised in that the lifting cylinder (19, 23, 25) of each drive means (18, 23, 25) is in the form of a hydraulic cylinder (19, 23, 25).

7. Machine according to claim 3 or 4 and 5 or 6, characterised in that the lifting cylinder (13, 23, 26) of the lifting device (14, 23, 26) and the lifting cylinder (19, 23, 25) of each drive means (18, 23, 25) are connected to a common system for circulating the actuating medium.

8. Machine according to at least one of claims 1 to 7, characterised in that the lifting devices and the drive means associated therewith are combined to form one lifting cylinder (23).

9. Machine according to claim 8, characterised in that each lifting cylinder (23) has two piston rods (25, 26), one piston rod (25) being connected to the respective first boom portion (7), and the other piston rod (26) being connected to the respective tensioning means (6).

10. Machine according to at least one of claims 1 to 7, characterised in that the pivotal mounting (21) of the drive means (18) is displaceable in a guide means, which is in the form of a slot (22).

11. Machine according to claim 10, characterised in that the guide means, which is in the form of a slot (22), is disposed on the lateral extension (3, 7).

12. Machine according to at least one of claims 1 - 11, characterised in that the drive means (19, 23, 25) is disposed beneath the lateral extension (3).

**Revendications**

1. Machine pour épandre notamment des matériaux granulés, machine comportant un réservoir et une tringlerie de répartition, laquelle, dans sa position de fonctionnement, s'étend latéralement des deux côtés du réservoir, transversalement par rapport à la direction de déplacement de la machine, avec une flèche latérale, chacune de ces flèches latérales étant subdivisée en au

10

moins deux parties de tringlerie susceptibles de se déplacer l'une par rapport à l'autre, la partie de tringlerie interne ou première partie de tringlerie contiguë au réservoir, étant articulée sur le châssis de la machine au moyen d'une articulation interne ou première articulation, avec un axe s'étendant dans la direction de déplacement, et cette première partie de tringlerie étant articulée au moyen d'une articulation externe ou deuxième articulation à la partie de tringlerie externe ou deuxième partie de tringlerie, les parties de tringlerie de chaque flèche latérale étant reliées entre elles par l'intermédiaire d'éléments de commande, de façon que lors du pivotement de la première partie de tringlerie autour de l'axe de la première articulation au moyen d'un élément d'entraînement articulé sur cette partie de tringlerie et sur le châssis de la machine, la seconde partie de tringlerie accomplit impérativement, de façon correspondante un mouvement de reploiement autour de la deuxième articulation, tandis qu'en outre, la partie de tringlerie externe est reliée au châssis de la machine par un élément tendeur dont la longueur peut être modifiée, machine caractérisée en ce que, en supplément des éléments d'entraînement (19, 23, 25) permettant le reploiement de la flèche latérale (3), un dispositif de levage (14, 23, 26) est respectivement disposé entre le châssis de la machine et la deuxième partie de tringlerie (9) pour permettre d'incliner la flèche latérale (3) lorsqu'elle est développée, tandis qu'au moins une des articulations (21) de chaque élément d'entraînement (19) est susceptible de se déplacer par rapport à la première partie de tringlerie (7) et/ou par rapport au châssis de la machine, ou bien dans le cas d'articulations fixes, chaque élément d'entraînement (23, 25) est susceptible d'être actionné simultanément avec le dispositif de levage associé (23, 26) pour permettre le mouvement de pivotement intervenant lors de l'inclinaison de la flèche latérale (3).

2. Machine selon la revendication 1, caractérisée en ce que les dispositifs de levage (14, 23, 26) viennent en prise sur l'élément tendeur respectif (6).

3. Machine selon la revendication 1 ou 2, caractérisée en ce que chaque dispositif de levage (14, 23) est un vérin de levage (13, 23, 26).

4. Machine selon la revendication 3, caractérisée en ce que le vérin de levage (13, 23, 26) est un vérin hydraulique (13, 23, 26).

5. Machine selon au moins une des revendications 1 à 4, caractérisée en ce que chaque élément d'entraînement (19, 23, 25) est un vérin de levage.

6. Machine selon la revendication 5, caractérisée en ce que le vérin de levage (19, 23, 25) de chaque élément d'entraînement (18, 23, 25) est un vérin hydraulique (19, 23, 25).

FIG.1

FIG.2

FIG.3

FIG. 4

FIG. 5

FIG. 6

FIG. 7